# EUROPEAN PATENT APPLICATION

(11) **EP 1 066 901 A2**
(43) Date of publication of application: **10.01.2001**
(21) Application number: 00850114.0
(22) Date of filing: 21.06.2000
(51) Int. Cl.: B23B 51/02, B23B 51/06

(54) **Tool for chip removing machining**

(30) Priority: 02.07.1999 SE 9902293
(71) Applicant: SECO TOOLS AB, S-737 82 Fagersta (SE)
(72) Inventor: Bruhn, Johnny, 730 70 Västerfärnebo (SE); Grönkvist, Mikael, 603 50 Norrköping (SE); Puide, Mattias, 737 44 Fagersta (SE)
(74) Representative: Taquist, Lennart

(57) **Abstract**

The present invention relates to a tool. The tool (10) has a central portion (12) of relatively tough hard material connected to a peripheral portion (13) of relatively wear resistant hard material. The chip flutes (18) of the tool (10) consists entirely of relatively wear resistant hard material.

## Description

### Field of the invention

The present invention relates to a tool for chip removing machining comprising a relatively tough core connected to a relatively wear resistant periphery according to the preamble of the independent claim.

### Prior art

It is previously known through for example WO 98/28455 to press a core and a surrounding tube of material powder in two steps. The material powder consist of wolfram carbide (WC) together with cobalt (Co) that are compressed between a punch and a die, and that subsequently are sintered such that the binder metal is melted and binds the carbides to form a tool material for chip removing machining. The known technique brings about a plurality of drawbacks, inter alia at manufacture of elongated slender bodies. The powder give off dust and the formed green body (pressed but not sintered material) will not endure handling to any degree. Furthermore the chip flutes must be ground and the method requires time. The problems have partly been solved by injection moulding of hard metal mixed in a carrier such as indicated in U.S. patent No. 5,947,660. The method of injection moulding brings a high degree of freedom concerning geometry but brings about troubles at manufacture of elongated slender bodies and costly investments in moulds.

Through U.S. patent No. 4,779,440 a tool is previously known according to the preamble of claim 1, for forming a blank for a helix drill. An extruded drill blank having chip flutes of constant pitch along the circumference of the blank is obtained by heating a hard metal powder to extrusion temperature, pressing the heated powder under high energy consumption through a space defined by a mandrel and a nozzle while rotating the blank. The blank is guided by the extrusion in direction past a helical ridge provided at the inside of the nozzle, to shape chip flutes along the blank. A drawback of the known technique is that the produced tool does not obtain maximum length of service time.

### Objects of the invention

One object of the present invention is to provide a tool, whereby the drawbacks of the known technique are eliminated.

Another object of the present invention is to provide a tool having optimum length of service time.

These and other objects have been achieved by a tool such as defined in the appended claims with reference to the drawings.

### Description of the drawings

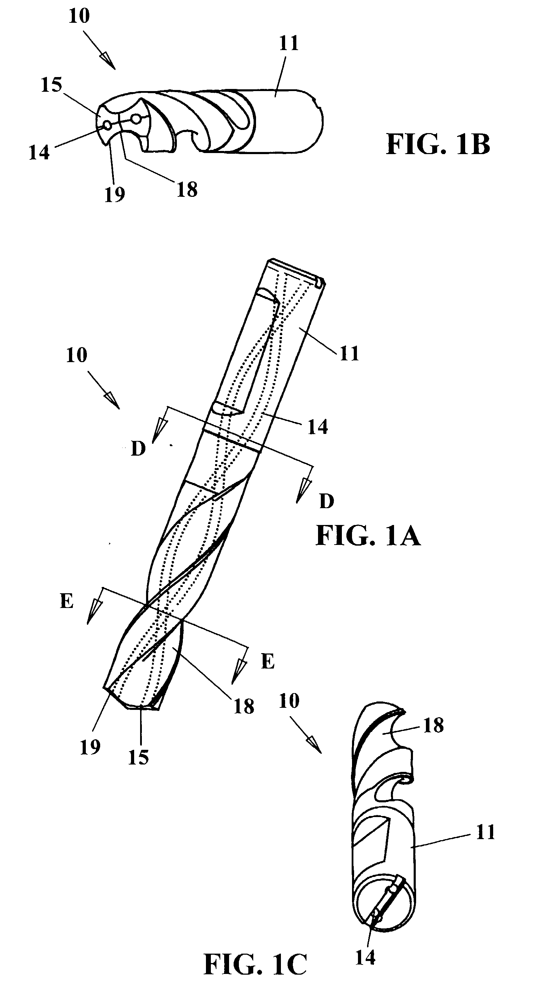

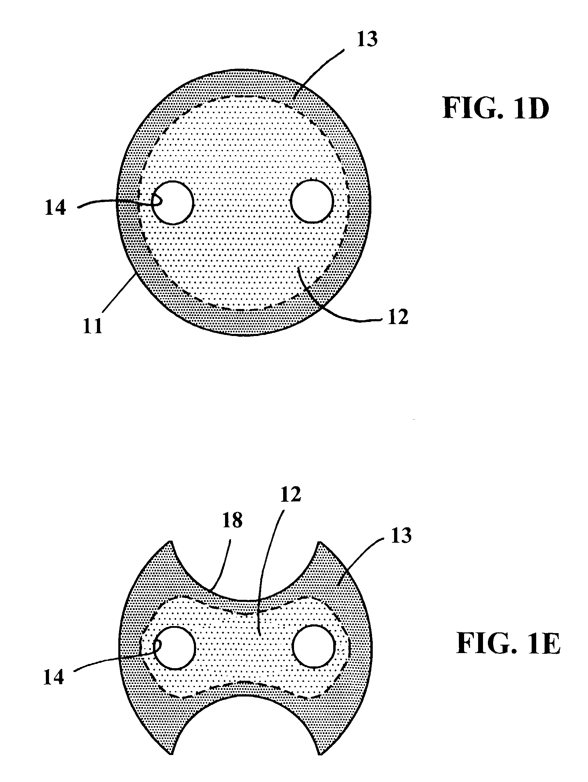

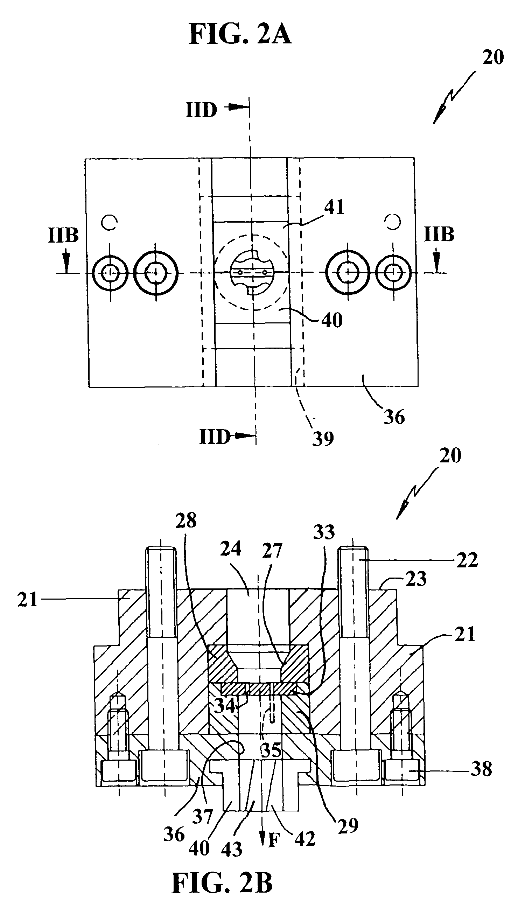

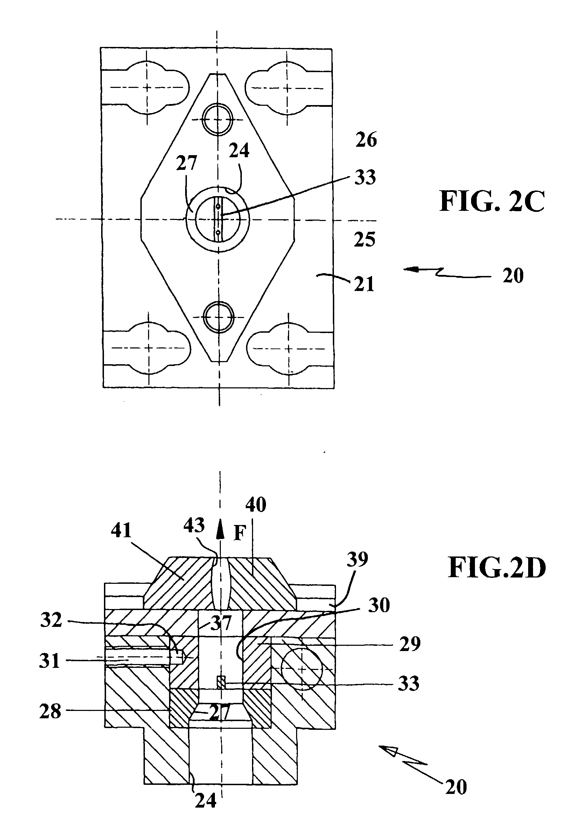

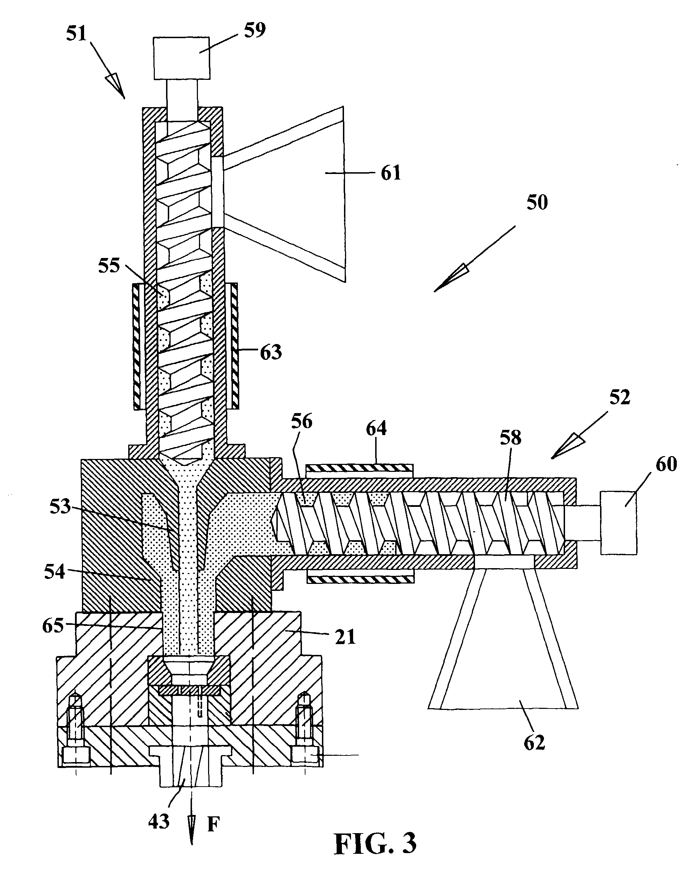

Figs. 1A-1C schematically show a drill according to the present invention in a side view and in front and rear perspective views, respectively. Fig. 1D shows a cross-section according to the line D-D in Fig. 1A. Fig. 1 E shows a cross-section according to the line E-E in Fig. 1A. Fig. 2A shows a device according to the present invention for the manufacture of elongated green bodies, in a front view. Fig. 2B shows the device in a section according to the line IIB-IIB in Fig. 2A. Fig. 2C shows the device in an end view. Fig. 2D shows the device in section according to the line IID-IID in Fig. 2A. Fig. 3 shows the device and a feed portion.

### Detailed description of the invention

The embodiment of a tool shown in Fig. 1A-1C is a so-called helix drill. The drill 10 comprises a substantially solid shank 11 having a first tip forming end comprising at least one cutting edge 19, a number of chip flutes 18 that are equal in number as there are cutting edges. The drill comprises a central portion of relatively tough hard material connected to a peripheral portion 13 of relatively wear resistant hard material. The drill 10 is made in solid hard material, such as extruded hard metal, and includes helical chip flutes 18 and these can extend along the entire body or along a part thereof. The shank 11 shall be secured into a rotatable spindle, not shown. The drill has two upper clearance surfaces 15.

The drill is extruded from two different materials where the difference consists in the balance of hard substance (for example wolfram carbide, WC) and binder (for example cobalt, Co). All external surfaces and associated edges are made from the same material, i.e. extruded wear resistant hard metal with a relatively low content of cobalt. The chip flutes 18 of the tool 10 entirely consist of wear resistant hard material that gives both strength and wear resistance to the drill. As is obvious from Figs. 1D and 1E the major part of the cross-section is in the tough portion 12 that is completely surrounded by the wear resistant portion 13 except at its ends. A rigid and hard "shell" is thereby obtained at the drill. Furthermore, the flush channels 14 preferably extend only in the tougher portion. Lines of intersection of the chip flutes 18 and the clearance surfaces 15 form the main cutting edges 19, preferably via reinforcing chamfers, not shown.

A device 20 according to the present invention for the production of elongated green bodies is shown in Figs. 2A-2D. The device 20 comprises a rectangular housing 21 of steel, which is intended to be fastened with for instance bolts to a machine for extrusion, not shown. The housing 21 has two bolts 22 to be fastened in the machine and has a rear surface 23 intended to seal against said machine. The housing has a central through-going recess 24 through which at least two compounds will be pressed. The recess 24 transforms into a diameter reducing restriction 27 in a circular nozzle 28. The nozzle 28 is made from a wear resistant material such as hard metal. The recess 24 then continues in a cylindrical inner, centrally positioned hole 30 into a circular die 29, which is provided next to and in connection with the nozzle 28. The position of the die 29 relative to the housing is determined by cooperation between a stop screw 31 in the housing and a hole 32 extending laterally relative to the principal feed direction F of the compounds. A bar-shaped core 33 is recessed into the die. The core is rectangular and includes two holes 34 to receive elongated pins 35. The pins 35 are intended to project from the core in the feed direction F in case flush channels are to be formed in the blank. The recess 24 then continues in the form of a coaxial hole 37 in a lid 36. The lid 36 is attached to the housing by means of two screws 38 and screws 22. The lid 36 is provided with a T-groove 39, which extends between two long sides of the lid 36. The groove 39 is intended to receive two jaws 40, 41, the basic shape of which according to Fig. 2B essentially form a T. Each jaw 40, 41 includes a spacing 42 facing towards the other jaw. The spacing 42 includes a helical ridge 43 such that when the jaws lie against each other the spacings form the cross-section of a helix drill having chip flutes. The jaws are pressed against each other by means of power means, not shown, and the same means is used in case the jaws will be displaced apart, such as when the blank must be partly cylindrical, for example at the drill shank. Preferably a supporting table is placed in connection with the jaws to support the hot extruded blank.

A feed device 50 connected to the housing 21 is shown in Fig. 3. The feed device 50 comprises at least two separate chambers 51, 52. A central chamber 51 is provided substantially symmetrically about the feed direction F and comprises a central nozzle 53 facing towards the housing 21. At least one second chamber 52 is provided substantially perpendicular to the feed direction F and comprises a nozzle 54 provided in connection with the nozzle 28. The nozzle 54 is provided co-axial with the nozzle 53 but is axially closer to the house 21 then is the latter. The first chamber 51 is provided to contain a first compound 55 having a relatively high cobalt content while the second chamber 52 is provided to contain a second compound 56 having a relatively low cobalt content. The chambers comprises feed worms 57, 58 to drive the two compounds forwards in the feed direction F. Each feed worm is driven by a motor 59, 60. The granules are fed into funnel-like openings 61, 62. The chambers are at least partially surrounded by heaters 63, 64.

The drill or the end milling cutter is manufactured as follows. Hard metal powder having a certain cobalt content and a carrier, for example a polymer, is mixed into compounds and shaped to pellets or granules. That is done such that at least two different compounds are obtained, where the difference lies in the amount of cobalt. The binder will be the matrix of the green body. The difference in the content of binder lies within the interval of 1-10 percentage points by weight. The term "cobalt" shall here be understood as a metallic binder that alternatively can be exchanged for or include other metals, for example nickel, Ni. Then the compounds are preheated to a temperature suitable for the compounds, preferably to the same temperature, and they are inserted into a machine 50 for extrusion. Then the compounds are pressed in the respective chamber 51, 52 at high pressure and at a certain temperature, about 180 °C towards the respective nozzle 53, 54 whereby said second plastic compound will abut against said first plastic compound and forming a substantially cylindrical rod 65. Then the hot compounds reach the core 33 and pass this on each side through the two substantially semi-circular openings formed about the core. The width of the core (see Fig. 2A) is preferably less than the diameter of the inner compound. Rearwardly of the core in the feed direction F the compounds again fuse to a cylindrical rod. If the pins 35 are provided in the core then spaces are formed in the body, which later will constitute flush channels. The pins are chosen long enough to allow the compound to cool such that fusion is avoided. The surroundings of the flush channel can be chosen to consist of only the first or the second compound or a combination thereof by choosing parameters for the extrusion and especially the diameter of the nozzle 53. Then the compounds reach the spacing 42 which is defined by the jaws 40, 41 whereby the compounds due to the ridges 43 are screwn through the jaws and obtain the cross-section of a helix drill. Contrary to prior art the chip flutes of the drill made in accordance with the present invention will consist entirely of the more wear resistant hard metal. When the compounds come out from the jaws they cool quickly due the surrounding temperature and the blank continues to extrude until the chip flute part is sufficiently long. Subsequently the jaws 40, 41 are drawn apart and away from the compound such that a cylindrical shank portion is formed. The length of the shank part is determined either by how long the extrusion is continued or by when the jaws are displaced inwardly such that a new blank is initiated. In the latter case two or more blanks are continuous. The solidified blank can then be cut or be broken, for example by hand.

Then the blank is heated in a separate furnace such that the carrier is burned off and such that the binder metal melts and binds the carbides. Then further machining takes place, such as grinding for example at edge portions, shank portion and clearance surfaces.

Thus the periphery of the tool obtains a higher wear resistance due to the lower content of binder, for example cobalt, while the center portion consist of tougher more cobalt rich hard metal.

With the present method a tool with a long service life can be produced with or without chip flutes and with or without a shank portion and allows a simple handling to a low cost. This can be done without generating dust. In addition at least one jaw can be used to make marks in the shank portion of the blank where a plane is to be ground for chucking. Thereby the grinding volume can be minimized.

The invention is in no way limited to the above described embodiments but can be varied freely within the scope of the appended claims. Thus the invention can be used also for solid end mills. The tool can be coated with layers of for example Al₂O₃, TiN and/or TiCN.

## Claims

1. A tool for chip removing machining such as a drill or an end mill, comprising a substantially solid shank (11) having a first tip forming end comprising at least one cutting edge (19), a number of chip flutes (18) that correspond to the number of cutting edges, having a central portion (12) of relatively tough hard material connected to a peripheral portion (13) of relatively wear resistant hard material, **characterized in** that the chip flutes (18) of the tool (10) entirely consist of relatively wear resistant hard material.

2. The tool according to claim 1,**characterized in** that the tool (10) is made of extruded hard metal, and in that it comprises helical chip flutes 18 and these can extend along the entire body or along a part thereof.

3. The tool according to claim 1 or 2, **characterized in** that the major part of the cross-section of the tool (10) is in the tough central portion (12) and in that shape of the cross-section at the tough central portion (12) is different from that of a shank portion (11).

4. The tool according to claim 1, 2 or 3, **characterized in** that the tool (10) has flush channels (14), which extend though the tough central portion (12) only.
